# EUROPEAN PATENT APPLICATION

(11) **EP 4 321 546 A1**
(43) Date of publication of application: **14.02.2024**
(21) Application number: 22784458.6
(22) Date of filing: 16.03.2022
(51) Int. Cl.: C08G 2/24, C08K 7/04, C08L 59/00, B28B 1/24, C08K 3/00, B22F 3/02

(54) **MOLDED BODY, METHOD FOR PRODUCING MOLDED BODY AND METHOD FOR PRODUCING SINTERED BODY**

(30) Priority: 07.04.2021 JP 2021065483
(71) Applicant: Asahi Kasei Kabushiki Kaisha, Tokyo 1000006 (JP)
(72) Inventor: FUKAI, Motohiro, Tokyo 100-0006 (JP); MIYAZAKI, Kuon, Tokyo 100-0006 (JP)
(74) Representative: Hoffmann Eitle
(86) International application number: PCT/JP2022/012081
(87) International publication number: WO 2022/215473

(57) **Abstract**

A molded body that can suppress plastic deformation during conveyance is provided. A molded body according to the present disclosure is a molded body containing a sinterable inorganic powder and an organic binder, wherein the bending modulus (MPa) upon 0.05% to 0.1% strain of the above molded body is 4000 to 15000, and the bending yield strength (MPa) is 10 or more.

## Description

### TECHNICAL FIELD

The present disclosure relates to a molded body, a method of producing a molded body, and a method of producing a sintered body.

### BACKGROUND

Particularly precise sintered bodies and sintered bodies having complex shapes made from sinterable powders such as powders of metals, ceramics, cermets, etc., are produced as follows. First, a composition for use in sintered bodies containing a sinterable powder and a binder is prepared. Next, the prepared composition for use in sintered bodies is heated and kneaded to produce a raw material for sintered bodies, which is then injection molded to form green molded bodies. The green molded bodies then undergo a degreasing step to remove the binder from the green molded bodies by a thermal treatment or a solvent treatment. Finally, the green molded bodies from which the binder has been removed are sintered at a predetermined temperature. Thus, sintered bodies are obtained.

In the above production process of sintered bodies, plastic deformation such as distortion or damage may be generated in the green molded bodies obtained by injection molding of the composition for use in sintered bodies while they are being conveyed to the degreasing step. Conventionally, the degrees of plastic deformation of such green molded bodies have been evaluated using the bending strengths of the green molded bodies (green strength) as indices (see, for example, PTLs 1-3).

### CITATION LIST

### Patent Literature

PTL 1: JP 2009-542880 A
PTL 2: JP 2001-106581 A
PTL 3: JP 2005-205805 A

### SUMMARY

### (Technical Problem)

However, in the evaluations using bending strengths as indices as described in PTLs 1-3, a green molded body in which the yield point appears outside the elastic region is evaluated as a good product in which defects will not occur. As a result, when an external force near the maximum bending strength is applied during conveyance of the green molded body, compositional deformation may be generated.

The present disclosure was made in view of the aforementioned problem, and an object thereof is to provide a molded body that can suppress plastic deformation during conveyance.

### (Solution to Problem)

As a result of diligent study to solve the aforementioned problem, the present inventors have found that the above problem can be solved by a green molded body that not only has a certain bending yield strength but also has a certain bending modulus.

Thus, the present disclosure is as follows.
[1] A molded body comprising a sinterable inorganic powder and an organic binder,
   wherein a bending modulus (MPa) upon 0.05% to 0.1% strain of the molded body is 4000 to 15000, and
   a bending yield strength (MPa) is 10 or more.
[2] The molded body according to the above [1], wherein a product of the bending modulus (MPa) and the bending yield strength (MPa) is 50000 or more.
[3] The molded body according to the above [1] or [2], wherein a number of voids that are equal to or larger than 30 µm per 1 mm² is 10 or less when a cross section is observed under a microscope.
[4] The molded body according to any one of the above [1] to [3], wherein a maximum particle diameter of the sinterable inorganic powder is 30 µm or less.
[5] The molded body according to any of the above [1] to [4], a polyacetal resin is contained as the organic binder.
[6] The molded body according to any one of the above [5], wherein a melt flow rate of the polyacetal resin is 70 to 200 g/10 min.
[7] The molded body according to any one of the above [1] to [6], wherein 75 mass% or more and 95 mass% or less of the sinterable inorganic powder is contained with respect to 100 mass% of the molded body.
[8] The molded body according to any one of the above [1] to [7], wherein the sinterable inorganic powder is metal powder.
[9] The molded body according to any one of the above [1] to [8], wherein a portion with a thickness of 1 mm or less is present at 100 mm² or more.
[10] A method of producing a molded body comprising a sinterable inorganic powder and an organic binder, the method comprising:
   a kneading step of kneading the sinterable inorganic powder and the organic binder to obtain a kneaded product; and
   a molding step of molding the kneaded product to obtain a molded body,
   wherein a bending modulus (MPa) upon 0.05% to 0.1% strain of the molded body is 4000 to 15000, and
   a bending yield strength (MPa) is 10 or more.
[11] The method of producing a molded body according to the above [10], wherein a kneading temperature in the kneading step is 160 °C to 200 °C.
[12] The method of producing a molded body according to the above [10] or [11], wherein a cylinder temperature in the molding step is 150 °C to 190 °C.
[13] The method of producing a molded body according to any one of the above [10] to [12], wherein an injection pressure in the molding step is 50 MPa or more.
[14] The method of producing a molded body according to any one of the above [10] to [13], wherein 75 mass% or more and 95 mass% or less of the sinterable inorganic powder is contained with respect to 100 mass% of the molded body.
[15] A method of producing a sintered body, the method comprising:
   a degreasing step of removing the organic binder from the molded body according to any one of the above [1] to [9] or a molded body produced by the method of producing a molded body according to any one of the above [10] to [14] by heating or a chemical treatment to obtain a sintering precursor; and
   a sintering step of sintering the sintering precursor to obtain a sintered body.

### (Advantageous Effect)

According to the present disclosure, it is possible to provide a molded body that can suppress plastic deformation during conveyance.

### DETAILED DESCRIPTION

The following provides details of an embodiment to implement the present disclosure. Note that the present disclosure is not limited by the description given below, and may be implemented with various changes or modifications that are within the essential scope thereof.

### [Molded body]

A molded body of the present embodiment contains a sinterable inorganic powder and an organic binder. The molded body of the present embodiment is a pre-molded body (green molded body) prior to undergoing degreasing and sintering, which is obtained by injection molding of a composition for use in sintered body containing the inorganic powder and the organic binder described above. In this specification, "molded body" means "green molded body", and is explicitly distinguished from "sintered body" that is produced by degreasing and sintering a green molded body.

In the molded body of the present embodiment, it is essential that the bending modulus (MPa) upon 0.05% to 0.1% strain of the molded body is 4000 to 15000. It is also n that the value of the bending yield strength (MPa) of the molded body of the present embodiment is 10 or more. When the bending modulus (MPa) upon 0.05% to 0.1% strain of the above molded body is 4000 to 15000 and the value of the bending yield strength (MPa) is 10 or more, plastic deformation such as distortion or damage of the molded body can be suppressed while the molded body is being conveyed. The above bending modulus and bending yield strength can be measured by the method described in Examples to be described later.

The bending modulus (MPa) upon 0.05% to 0.1% strain of the above molded body is preferably 5000 or more, more preferably 6000 or more, and even more preferably 7000 or more from the viewpoint of strength of the molded body. In addition, the upper limit is preferably 14500 or less, more preferably 14000 or less, and even more preferably 13000 or less, from the viewpoint of thin formability.

The bending yield strength is preferably more than 10 MPa, and more preferably 15 MPa or more, from the viewpoint of strength of the molded body. In addition, the upper limit is preferably 40 MPa or less, and more preferably 35 MPa or less, from the viewpoint of reducing the likelihood of being damaged when the molded body is dropped.

The product of the bending modulus (MPa) and the bending yield strength (MPa) described above is preferably 50,000 or more, and more preferably 100,000 or more. When the product of the bending modulus and the bending yield strength is 50,000 or more, plastic deformation such as distortion or damage of the molded body can be further suppressed while the molded body is being conveyed.

In addition, it is preferable that the number of voids that are equal to or larger than 30 µm per 1 mm² is 10 or less when a cross section of the molded body of the present embodiment is observed under a microscope. This further suppresses plastic deformation such as distortion or damage in the molded body while the molded body is being conveyed. The above observation of a cross section under a microscope can be carried out by the method described in Examples to be described later.

The molded body of the present embodiment preferably has at least a portion where the thickness is 1 mm or less. It is preferable that the portion with a thickness of 1 mm or less is present at 1 mm² or more, and it is more preferable that the portion with a thickness of 1 mm or less is present at 100 mm² or more. In general, plastic deformation during conveyance is more likely to occur in molded bodies in which the area of the portion with a thickness of 1 mm or less is wide. However, in the molded body of the present embodiment, plastic deformation during conveyance can be effectively suppressed even when the area of the portion with a thickness of 1 mm or less is wide.

The molded body according to the present embodiment is obtained by producing a composition for use in sintered bodies containing the sinterable inorganic powder and the organic binder that constitute the molded body, and injection molding the produced composition for use in sintered bodies using a heated screw and a piston type injection molding machine.

In addition to the inorganic powder and the organic binder, the above composition for use in sintered bodies and the resultant molded body may also contain other additives.

### <Sinterable inorganic powder>

In the present embodiment, the "sinterable inorganic powder" (hereinafter, sometimes simply referred to as "inorganic powder") can be selected from any known suitable sinterable inorganic powders. It is preferably selected from metal powders, alloy powders, metal carbonyl powders, and mixtures thereof. Among these, metal powders and ceramic powders are more preferred and metal powders are particularly preferred to impart functionality.

One of the above sinterable inorganic powders may be used alone or two or more of these may be used in a combination.

Specific examples of the above metal powders include powders of aluminum, magnesium, barium, calcium, cobalt, zinc, copper, nickel, iron, silicon, titanium, tungsten, and metal compounds and metal alloys based on these. Here, not only already prepared alloys but also mixtures of individual alloy components can be used.

Examples of ceramic powders include oxides such as zinc oxide, aluminum oxide, and zirconia; hydroxides such as hydroxyapatite; carbides such as silicon carbide; nitrides such as silicon nitride and boron nitride; halides such as fluorite; silicates such as stealite; titanates such as barium titanate and lead zirconate titanate; carbonates; phosphates; ferrites; and high-temperature superconductors.

The inorganic powders described above may be used alone, or several inorganic materials such as various metals, metal alloys, or ceramics may be used in combination. Particularly preferred metals and alloy metals include titanium alloys and stainless steels such as SUS316L, and ceramics are exemplified by Al₂O₃ and ZrO₂.

The average particle diameter of the above inorganic powder is preferably 30 µm or less, more preferably 20 µm or less. Moreover, the maximum particle diameter of the inorganic powder is preferably 30 µm or less, and more preferably 20 µm or less. When the maximum particle diameter of the inorganic powder is 30 µm or less, dispersion of the metal powder is promoted and an injection molded body with a higher strength can be obtained. The above average particle diameter and maximum particle diameter can be measured, for example, by a particle size analyzer employing the laser diffraction method.

The mass ratio of the above sinterable inorganic powder is preferably 70 to 95 parts by mass, more preferably 75 to 95 parts by mass, and particularly preferably 80 to 95 parts by mass with respect to 100 parts by mass of the above molded body. When the sinterable inorganic powder is within any of the above ranges, it is possible to obtain a composition for use in sintered bodies with a melt viscosity suitable for injection molding and a molded body with high strength.

### <Organic binder>

The organic binder is not limited, but preferably includes a polyacetal resin. By using a polyacetal resin, which is a depolymerized polymer, as an organic binder, a molded body with excellent shape retentionability can be obtained relying on the rigidity inherent to a polyacetal resin. The molded body has excellent shape retentionability even after undergoing a degreasing step by heating, and no residue remains after degreasing by heating. Furthermore, production efficiency can be improved because the degreasing step by heating can be performed quickly.

### (Polyacetal resin)

Examples of the above polyacetal resin include polyacetal homopolymers, polyacetal copolymers, or mixtures thereof. Among these, polyacetal copolymers are preferred from the viewpoint of thermal stability.

One of the above polyacetal resins may be used alone, or two or more of these may be used in combination.

Examples of the above polyacetal homopolymers include polymers having an oxymethylene unit in the main chain, and both ends of the polymer can be capped by ester or ether groups. Polyacetal homopolymers can be produced from formaldehyde and a known molecular weight modifier used as raw materials, and can be produced from these raw materials using a known onium salt-based polymerization catalyst in a solvent such as a hydrocarbon, by a known slurry method, such as the polymerization methods described in JP S47-6420 B and JP S47-10059 B, for example.

In the polyacetal homopolymer, it is preferable that 99.8 mol% or more of the main chain excluding both ends is composed of an oxymethylene unit, and it is more preferable that the polyacetal homopolymer is a polyacetal homopolymer of which main chain excluding both ends is composed only of an oxymethylene unit.

Examples of polyacetal copolymers include polymers having an oxymethylene unit and an oxyethylene unit in the main chain, and they can be produced through copolymerization of trioxane with a cyclic ether and/or a cyclic formal in the presence of a polymerization catalyst, for example. Trioxane is a cyclic trimer of formaldehyde, and is typically produced through a reaction of an aqueous solution of formalin in the presence of an acidic catalyst.

Because the above trioxane may contain impurities having chain transferring capability, such as water, methanol, formic acid, methyl formate, and other impurities, these impurities are preferably removed to purify trioxane by means of distillation, for example. In the purification, the total amount of impurities having chain transferring capability is preferably reduced to 1 × 10⁻³ mol or less, and more preferably to 0.5 × 10⁻³ mol or less, per 1 mol of trioxane. By setting the total amount of impurities to a low value as the above-described values, the rate of the polymerization reaction can be increased sufficiently for practical use and an excellent thermal stability can be imparted to a resultant polymer.

A cyclic ether and/or cyclic formal are substances that can be copolymerized with the trioxane, and examples thereof includes ethylene oxide, propylene oxide, butylene oxide, epichlorohydrin, epibromohydrin, styrene oxide, oxatane, 1,3-dioxolane, ethylene glycol formal, propylene glycol formal, diethylene glycol formal, triethylene glycol formal, 1,4-butanediol formal, 1,5-pentanediol formal, and 1,6-hexanediol formal. Ethylene oxide and 1,3-dioxolane are particularly preferred. They may be used alone or in a combination of two or more.

The amount of the cyclic ether and the cyclic formal added is preferably 1.0 mol% or more, more preferably 3.0 mol% or more, and even more preferably 3.5 mol% or more with respect to 1 mol of the above trioxane. In addition, the amount is preferably 8.0 mol% or less, more preferably 7.0 mol% or less, and even more preferably 5.0 mol% or less with respect to 1 mol of the above trioxane.

Examples of the polymerization catalysts include boric acid, tin, titanium, phosphorus, arsenic, and antimony compounds represented by Lewis acids, and in particular, preferred are boron trifluoride, boron trifluoride hydrates, and coordination complex compounds of boron trifluoride with organic compounds containing oxygen or sulfur atoms. For example, boron trifluoride, boron trifluoride diethyl etherate, and boron trifluoride-di-n-butyl etherate are exemplified as suitable examples. They may be used alone or in a combination of two or more.

The amount of the polymerization catalyst added is preferably in a range from 0.1 × 10⁻⁵ to 0.1 × 10⁻³ mol, more preferably in a range from 0.3 × 10⁻⁵ to 0.3 × 10⁻⁴ mol, and even more preferably in a range from 0.5 × 10⁻⁵ to 0.4 × 10⁻⁴ mol, with respect to 1 mol of the above trioxane. When the amount of polymerization catalyst added is within any of the above ranges, a long-time polymerization reaction can be stably carried out.

In the production of a polyacetal copolymer, the deactivation of the polymerization catalyst is achieved by charging the polyacetal resin obtained through the polymerization reaction into an aqueous solution or organic solvent solution containing at least one catalyst neutralization deactivator, e.g., amines such as ammonia, triethylamine, or tri-n-butylamine, or a hydroxide of alkali metals or alkaline earth metals, inorganic salts, or organic salts, and stirring the mixture in the slurry state for several minutes to several hours. After catalyst neutralization deactivation, the slurry is filtered and washed to remove unreacted monomers, the catalyst neutralization deactivator, and the catalyst neutralization salt, and then dried.

Alternatively, to deactivate the polymerization catalyst, the method in which vapor of ammonia, triethylamine, or the like is brought into contact with the polyacetal copolymer, or the method in which at least one of hindered amines, triphenylphosphine, calcium hydroxide, and the like is brought into contact with the polyacetal resin in a mixing machine may also be used.

Alternatively, without deactivating the polymerization catalyst, an end stabilization process to be described later may also be performed using a polyacetal copolymer in which the amount of the polymerization catalyst is reduced through volatilization by heating at a temperature of the melting point of the polyacetal copolymer or below in an inert gas atmosphere. The above-described polymerization catalyst deactivation operation and the polymerization catalyst volatilization reduction operation may be performed after pulverizing the polyacetal resin obtained through the polymerization reaction, if necessary.

The end stabilization treatment of the resulting polyacetal resin involves decomposition and removal of unstable ends by the following method. As the method of decomposition and removal of unstable ends, for example, a single screw extruder with a vent or a twin screw extruder with a vent is used to melt the polyacetal resin and decompose and remove unstable ends in the presence of a known basic substance that can decompose unstable ends, e.g., ammonia, fatty acid amines such as triethylamine and tributylamine, hydroxides of alkali metals or alkaline earth metals such as calcium hydroxide, inorganic weak acids, and organic weak acids as a cutting agent.

The mass ratio of the above polyacetal resin in the above organic binder is preferably 5 to 95 mass%, more preferably 5 to 70 mass%, and particularly 5 to 60 mass%, with respect to 100% mass of the organic binder.

In cases where the organic binder is removed from a molded body by heating, the mass ratio of the polyacetal resin is preferably 5 to 50 mass%, more preferably 5 to 45 mass%, and particularly preferably 10 to 40 mass%, with respect to 100 mass% of the organic binder.

When the ratio of the polyacetal resin in the organic binder is set to any of the above ranges, the shape of the green molded body tends to be favorably retained.

The melt flow rate of the above polyacetal resin is preferably 70 g/10 min or more and 200 g/10 min or less, more preferably 90 g/10 min or more and less than 200 g/10 min, and even more preferably 90 g/10 min or more and less than 140 g/10 min, as measured under the conditions of 190 °C, 2.16 kg in accordance with ASTM-D-1238-57T. A melt flow rate of 70 g/10 min or more improves the fluidity of the composition for use in sintered bodies, and a melt flow rate of 200 g/10 min or lower improves the strength of a molded body.

Note that the melt flow rate of the polyacetal resin can be adjusted to be high by increasing the amount of a molecular weight modifier (e.g., methylal, methanol, formic acid, or methyl formate) added upon polymerization.

The melting point of the above polyacetal resin is preferably from 100 to 200 °C, more preferably from 140 to 180 °C. The above melting point is the peak melting temperature as measured according to JIS K7121, or the melting point on the high-temperature side if there are multiple melting temperatures.

In addition, the organic preferably contains a polyolefin resin, and more preferably contains a polyacetal resin and a polyolefin resin.

The polyacetal resin and the polyolefin resin have different thermal decomposition start points. This allows the organic binder to be gradually removed from a molded body during the temperature increase stage upon thermal degreasing of the molded body. Alternatively, in acid degreasing, the polyacetal resin is decomposed by an acid such as nitric acid and is removed from a molded body. By blending a polyolefin resin, which is not decomposed by an acid, the molded body from which the polyacetal resin has been removed can retain its shape.

### (Polyolefin resin)

The above polyolefin resin is a homopolymer or a copolymer having structural units derived from an alkene having a carbon number of 2 to 8, preferably a carbon number of 2 to 4.

The above polyolefin resin preferably has a melt flow rate of 40 g/10 min or more, measured under conditions of 190 °C, 2.16 kg, from the viewpoint of mixability with the sinterable inorganic powder when the composition for use in sintered bodies is prepared, and injection moldability when a molded body using the composition for use in sintered bodies is produced.

Specific examples of the above polyolefin resin include polyethylene, polypropylene, ethylene-propylene copolymer, ethylene-vinyl acetate copolymer, ethylene-vinyl alcohol copolymer, polyisoprene, and polybutadiene. Polyethylene, polypropylene, and mixtures thereof are preferred, and polyethylene or polypropylene is more preferred in terms of shape retentionability while the molded body is being conveyed to the degreasing step and prevention of cracking and swelling in the degreasing step. Examples of commercially available products that can be suitably used include SUNTEC HD series (manufactured by Asahi Kasei Corporation), SUNTEC LD series (manufactured by Asahi Kasei Corporation), and SUNTEC EVA series (manufactured by Asahi Kasei Corporation), and NEO-ZEX, ULTZEX, and Evolue (above are manufactured by Prime Polymer Co., Ltd.) as polyethylene; and Sumitomo NOBLEN (manufactured by Sumitomo Chemical Co., Ltd.), NOVATEC PP (manufactured by Japan Polypropylene Corporation), SunAllomer PM series (manufactured by SunAllomer Ltd.), and Prime Polypro (manufactured by Prime Polymer Co., Ltd.) as polypropylene, for example.

The above polyolefin resin is preferably resistant to degradation by an acid from the viewpoint of shape retentionability of a molded body after acid degreasing. From the viewpoint of the shape retentionability of a molded body after acid degreasing, it is preferable that the weight of the above polyolefin resin after immersed in a 30%-nitric acid solution under a condition of 23 °C (room temperature), 70 °C for 24 hours according to the method described in JIS K 7114 is preferably 10% or less, more preferably 5% or less, particularly preferably 1% or less of the weight before immersion.

From the viewpoint of favorably retaining the shape of a molded body and the shape of a molded body after acid degreasing, the mass ratio of the above polyolefin resin in the above organic binder is preferably 5 to 95 mass%, more preferably 5 to 70 mass%, and particularly preferably 5 to 60 mass%.

When the organic binder contains a polyacetal resin and a polyolefin resin, the mass ratio of the above polyolefin resin with respect to 100 parts by mass of the above polyacetal resin is preferably 1 to 200 parts by mass, more preferably 5 to 150 parts by mass, and even more preferably 10 to 120 parts by mass.

In addition, the ratio of the total mass of the above polyacetal resin and the above polyolefin resin in 100 mass% of the above organic binder is preferably 45 mass% or more. In addition, the ratio of the total mass of the above polyacetal resin, the above polyolefin resin, and the fluidity imparting agent to be described later in 100 mass% of the above organic binder is preferably 90 mass% or more, more preferably 95 mass% or more, and even more preferably 98 mass% or more.

The difference between the thermal decomposition start point (°C) of the above polyacetal resin and the thermal decomposition start point (°C) of the above polyolefin resin is preferably 30 °C or more, more preferably 30 to 100 °C, from the viewpoint of further reducing cracking and swelling during the degreasing step. The above thermal decomposition start point is the temperature measured using a thermogravimetric differential thermal analyzer.

### (Fluidity imparting agent)

The composition for use in sintered bodies for producing a molded body preferably further contains a fluidity imparting agent. The inclusion of the above fluidity imparting agent further improves the fluidity of the composition for use in sintered bodies.

The above fluidity imparting agent is a compound other than the polyacetal resins and polyolefin resins described above, such as waxes. Examples of the above waxes include paraffin wax, polyethylene wax, polypropylene wax, carbana wax, polyethylene glycol, polytetramethylene glycol, polytetraethylene glycol, polyisobutylene, microcrystalline wax, montan-based waxes, beeswax, wood wax, synthetic waxes, poly-1,3-dioxolane, and poly-1,3-dioxepane, for example. Among there, paraffin wax, polyethylene glycol, and polytetramethylene glycol are particularly preferred from the viewpoint of further improving the fluidity of the composition for use in sintered bodies during injection molding.

From the viewpoint of achieving further excellent fluidity of the composition for use in sintered bodies during injection molding, the mass ratio of the above fluidity imparting agent is particularly 5 to 60 mass%, more preferably 5 to 50 mass%, and particularly preferably 10 to 50 mass%, with respect to 100% mass of the above organic binder.

### (Nitrogen-containing compound and fatty acid metal salt)

It is preferred that the above polyacetal resin further contains a nitrogen-containing compound and/or a fatty acid metal salt, and it is more preferred that it contains a nitrogen-containing compound and a fatty acid metal salt.

The inclusion of the above nitrogen-containing compound and the above fatty acid metal salt provides excellent extrudability, thermal stability, and suppression on foreign matters upon production of the polyacetal resin. In addition, the fluidity of the composition for use in sintered bodies mixed with the metal powder and the strength of a molded body tend to be improved at the same time. The inclusion of the above nitrogen-containing compound and the above fatty acid metal salt improves the thermal stability of the composition for use in sintered bodies.

Examples of the above nitrogen-containing compound include, but are not particularly limited to, polyamide resins, amide compounds, urea derivatives, and triazine derivatives. Among these, polyamide resins are preferred from the viewpoint of providing further excellent thermal stability of the composition for use in sintered bodies composition and further excellent strength of a molded body. They may be used alone or in a combination of two or more.

Examples of the above polyamide resins include, but are not particularly limited to, nylon 6, nylon 11, nylon 12, nylon 66, nylon 6.10, nylon 6/6.10, nylon 6/6.6, nylon 6.6/6.10, nylon 6/6.6/6.10, and poly-β-alanine, for example.

Examples of the above amide compounds include, but are not particularly limited to, stearyl stearate amide, stearyl oleate amide, stearyl erucate amide, ethylenediamine-distearate amide, ethylenediamine-dibehenate amide, hexamethylenediamine-distearate amide, ethylenediamine-dierucate amide, xylylenediamine-dierucate amide, di(xylylenediamine-distearate amide), and sebacic acid amide, which are produced from aliphatic monocarboxylic acids, aliphatic dicarboxylic acids, aromatic monocarboxylic acids, or aromatic dicarboxylic acids, and aliphatic monoamines, aliphatic diamines, aromatic monamines, or aromatic diamines, for example.

Examples of the above urea derivatives include, but are not particularly limited to, N-phenylurea, N,N'-diphenylurea, N-phenylthiourea, and N,N'-diphenylthiourea, for example.

Examples of the above triazine derivatives include, but are not particularly limited to, melamine, benzoguanamine, N-phenylmelamine, melem, N,N'-diphenylmelamine, N-methylolmelamine, N,N'-trimethylolmelamine, 2,4-diamidino-6-cyclohexyltriazine, and melam, for example.

The mass ratio of the above nitrogen-containing compound is preferably 0.005 to 0.2 parts by mass, and particularly preferably 0.005 to 0.1 parts by mass with respect to 100 parts by mass of the polyacetal resin. The mass ratio of the above nitrogen-containing compound in the above range is preferable from the viewpoint that the thermal stability of the polyacetal resin is improved when the sinterable inorganic powder and the organic binder are kneaded.

Examples of the above fatty acid metal salt include, but are not particularly limited to, fatty acid metal salts obtained from a saturated or unsaturated fatty acid having a carbon number of 10 to 35 or fatty acid substituted by a hydroxy group, and a hydroxide, oxide or chloride of an alkali metal or an alkaline earth metal, for example.

Examples of the fatty acids of the above fatty acid metal salts include capric acid, undecylic acid, lauric acid, tridecylic acid, myristic acid, pentadecylic acid, palmitic acid, heptadecylic acid, stearic acid, nonadecanoic acid, arachidic acid, behenic acid, lignoceric acid, cerotic acid, heptacosanoic acid, montanic acid, undecylenic acid, oleic acid, elaidic acid, cetoleic acid, erucic acid, brassidic acid, sorbic acid, linoleic acid, linolenic acid, arachidonic acid, propiolic acid, stearolic acid, 12-hydroxydecanoic acid, 3-hydroxydecanoic acid, 16-hydroxyhexadecanoic acid, 10-hydroxyhexadecanoic acid, 12-hydroxyoctadecanoic acid, and 10-hydroxy-8-octadecanoic acid. Examples of the metal compounds include hydroxides or chlorides of alkali metals such as lithium, sodium, and potassium; alkaline earth metals such as magnesium, calcium, strontium, barium; zinc; or aluminum. Of these, it is preferable that the fatty acid is myristic acid, palmitic acid, or stearic acid and the metal compound is a hydroxide, an oxide, or a chloride of calcium, and calcium myristate, calcium palmitate, or calcium stearate is more preferred.

In cases where the above nitrogen-containing compound and the above fatty acid metal salt are added in the above composition for use in sintered bodies, the ratio of the mass of the above fatty acid metal salt to the mass of the above nitrogen-containing compound (mass of the fatty acid metal salt / mass of the nitrogen-containing compound) is preferably within a certain range, and specifically the ratio is 1 to 15, preferably 1 to 10. The ratio of 1 to 15 is preferred because the thermal stability of the polyacetal resin in the organic binder is improved.

From the viewpoint of keeping good moldability during injection molding and further suppressing cracking and swelling during the degreasing step, the mass ratio of the above organic binder in the above composition for use in sintered bodies is preferably 5 to 30 parts by mass, more preferably 5 to 20 parts by mass, and even more preferably 5 to 15 parts by mass, with respect with respect to 100 parts by mass of the above composition for use in sintered bodies.

It is preferred that resin components contained in the organic binder are only the above polyacetal resin, the above polyolefin resin, the above fluidity imparting agent, and the above nitrogen-containing compound (e.g., a polyamide resin). However, other additives may be added.

### (Other additives)

Other additives that can be added to the above composition for use in sintered bodies are not limited as long as they do not impair the effects of the present disclosure, and a preferred additive is an antioxidant.

Examples of the above antioxidant include n-octadecyl-3-(3',5'-di-t-butyl-4'-hydroxyphenyl)propionate, n-octadecyl-3-(3'-methyl-5'-t-butyl-4'-hydroxyphenyl)propionate, n-tetradecyl-3-(3',5'-di-t-butyl-4'-hydroxyphenyl)propionate, 1,6-hexanediol bis-(3-(3,5-di-t-butyl-4-hydroxyphenyl)propionate), 1,4-hutanediol bis-(3-(3,5-di-t-butyl-4-hydroxyphenyl)propionate), 3-(3,5-di-t-butyl-4-hydroxyphenyl)propionic acid, triethylene glycol bis-(3-(3-t-butyl-5-methyl-4-hydroxyphenyl)propionate), tetrakis(methylene 3-(3'-t-butyl-4'-hydroxyphenyl)propionate)methane, N,N'-bis-(3-(3,5-di-t-butyl-4-hydroxyphenyl)propionyl)hydrazine, N,N'-tetramethylene bis-3-(3'-methyl-5'-t-butyl-4'-hydroxyphenyl)propionyl diamine, N,N'-bis-3-(3',5'-di-t-butyl-4'-hydroxyphenol)propionyl hexamethylenediamine, 3-(N-salicyloyl)amino-1,2,4-triazole, N,N'-bis-(2-(3-(3,5-di-t-butyl-4-hydroxyphenyl)propionyloxy)ethyl)oxamide, and N,N'-hexamethylene bis-(3,3,5-t-butyl-4-hydroxyphenyl)propanamide, for example. These antioxidants may be used alone or in a combination of two or more.

The content of the antioxidant is 0.01 to 1.0 parts by mass, preferably 0.05 to 0.5 parts by mass, with respect to 100 parts by mass of the polyacetal resin. The content within the above range improves thermal stability.

The melt flow rate of the above composition for use in sintered bodies is preferably 80 g/10 min or more and less than 200 g/10 min, more preferably 90 g/10 min or more and less than 180 g/10 min, and even more preferably 90 g/10 min or more and less than 140 g/10 min, as measured under the conditions of 190 °C, 2.16 kg in accordance with ASTM-D-1238-57T. A melt flow rate of 80 g/10 min or more improves the fluidity of the composition for use in sintered bodies, and a melt flow rate of less than 200 g/10 min improves the strength of a green molded body.

Note that the melt flow rate of the composition for use in sintered bodies can be controlled within the above range by, for example, changing the type and the mass ratio of the polyacetal resin used. The melt flow rate of the composition for use in sintered bodies tends to be high as the melt flow rate of the polyacetal resin is high.

### (Method of producing composition for use in sintered bodies)

The above composition for use in sintered bodies can be produced by known methods without any particular limitations. Specifically, the sinterable inorganic powder and the organic binder described above are mixed by, for example, a Henschel mixer, a tumbler, a V-shaped blender, or the like, and then melt-kneaded in a semi-molten state using a single screw extruder or a kneader such as a twin screw extruder, a heating roll, a kneader, and a Banbury mixer. The product can be obtained in various forms, such as strands and pellets.

### [Method of producing molded body]

A method of producing a molded body according to the present disclosure is a method of producing a molded body of the present containing a sinterable inorganic powder and an organic binder, the method including a kneading step of kneading the sinterable inorganic powder and the organic binder to obtain a kneaded product, and a molding step of molding the above kneaded product is to obtain a molded body. The above kneading step and molding step can be performed under desired conditions.

It is desirable to use a kneader such as a pressing kneader for kneading, and the kneading temperature thereupon is preferably 160 °C to 200 °C, more preferably 160 °C to 190 °C, and even more preferably 160 °C to 180 °C. By setting the kneading temperature to 160 °C or higher, kneading is performed in the vicinity of the melting temperature of the resin, which can improve the dispersion of the resin and can improve the bending modulus of the green molded body. In addition, by setting the kneading temperature to 200 °C or lower, decomposition of the resin during kneading is suppressed and the number of voids in a cross section of the green molded body can be controlled. By keeping the kneading temperature within the preferred range described above, the decreases in bending modulus and yield strength can be suppressed even if the composition is the same.

Upon injection molding, the cylinder temperature is set to preferably 150 °C to 190 °C, more preferably 160 °C to 190 °C, and even more preferably 165 °C to 185 °C. By setting the cylinder temperature to 150 °C or higher, the flowability of the resin can be increased to improve moldability to thereby increase the density and strength of the green molded body. By setting the cylinder temperature to 190 °C or lower, the separation of the resin during injection molding can be controlled and the strength of the green molded body can be increased. In addition, by keeping the kneading temperature within any of the preferred ranges described above, the decreases in bending modulus and yield strength can be suppressed even if the composition is the same.

The injection pressure upon injection molding is preferably 50 MPa or more. By increasing the injection pressure, the voids in the resulting molded body are reduced and the adhesion between the organic binder and the metal powder is improved, which increases the packing density of the resin and provides a molded body with a higher strength. The injection pressure is more preferably 60 MPa or more, and more preferably 70 MPa or more. There is no particular upper limit on the injection pressure, but an injection pressure at which a molding apparatus can be safely operated can be a realistic upper limit. Specifically, it is about 200 MPa.

Note that it is important that the injection pressure is equal to or higher than a certain value for the purpose of increase the strength of the molded body, and it is not important to increase the injection pressure excessively. If the strength of the resulting molded body is the same, a lower injection pressure is preferable for safety reasons.

Thus, a molded body with a bending modulus (MPa) upon 0.05% to 0.1% strain of 4000 to 15000 and a bending yield strength (MPa) of 10 or more can be produced.

The bending modulus (MPa) upon 0.05% to 0.1% strain of the above green molded body is preferably in the range of 4000 to 15000, more preferably 4000 to 12000, and particularly preferably 7000 to 12000. When the bending modulus is within any of the above ranges, plastic deformation during conveyance can be prevented while impact fracture due to dropping, etc. can be suppressed.

In addition, the bending strength (MPa) of the green molded body is preferably 10 or more, even more preferably from 10 to 100, and particularly preferably from 10 to 40. When the bending strength is within any of the above ranges, it is possible to obtain a molded body having a high strength which can withstand loads such as ejector ejections.

Furthermore, it is preferable that 75 mass% or more and 95 mass% or less of the sinterable inorganic powder is contained with respect to 100 mass% of the molded body. When the content of the sinterable inorganic powder is 75 mass% or more, separation during injection molding can be prevented and the strength of the molded body can be increased. In addition, when the content of the sinterable inorganic powder is 95 mass% or less, the molded body is prevented from becoming brittle. It is more preferable that 90 mass% or more and 95 mass% or less of the sinterable inorganic powder is contained.

### [Method of producing sintered body]

A method of producing a sintered body according to the present disclosure includes a degreasing step of removing the organic binder from the above-described molded body according to the present disclosure or a molded body produced by the above-described method of producing a molded body according to the present disclosure by heating or a chemical treatment to obtain a sintering precursor, and a sintering step of sintering the above sintering precursor to obtain a sintered body. The above degreasing step and sintering step can be performed under desired conditions.

In the case of thermal degreasing, degreasing is achieved by raising the temperature from room temperature to 500 °C to 600 °C under a nitrogen atmosphere. The fluidity imparting agent may be eluted into a solvent prior to heating.

The temperature is then raised to the sintering temperature of the sinterable inorganic powder to obtain a sintered body.

In the case of degreasing by an acid, degreasing is achieved by circulating nitric acid gas under a nitrogen atmosphere and raising the temperature from room temperature to 110 °C to 120 °C.

The temperature is then raised to the sintering temperature of the sinterable inorganic powder to obtain a sintered body.

### EXAMPLES

The following provides a more detailed description of the present disclosure through specific examples and comparative examples. However, the present disclosure is not limited to the following examples.

The terminology and measurement methods of the properties in the examples and comparative examples are as follows.

### [Raw materials]

### (A Polyacetal resin)

### (A-1)

A jacketed twin-shaft paddle type continuous polymerization reactor (manufactured by KURIMOTO, LTD., diameter 2B, L/D = 14.8) capable of allowing a heat medium to pass through was set to a temperature of 80 °C. A polymerization was caused to take place by continuously feeding, into the polymerization reactor, a catalyst liquid at 69 g/hr which was prepared by diluting boron trifluoride-di-n-butyl etherate as a polymerization catalyst to 0.26 mass% with cyclohexane, trioxane at 3500 g/hr, 1,3-dioxolane at 121 g/hr, and methylal as a molecular weight modifier at 7.9 g/hr.

The product discharged from the polymerization reactor was fed into a 0.5-mass% triethylamine solution to deactivate the polymerization catalyst, which was then filtered, washed, and dried.

Subsequently, the resultant was fed to a twin screw extruder provided with a vent (L/D = 40) set to 200 °C. In the end stabilization zone, a 0.8-mass% aqueous solution of triethylamine was added in an amount of 20 ppm in terms of the amount of nitrogen, stabilization was carried out while depressurizing and degassing at 90 kPa, and the resultant was pelletized by a pelletizer. Then, the resultant was dried at 100 °C for 2 hours to obtain an (A-1) polyacetal resin.

The resulting (A-1) polyacetal resin had a melting point of 164 °C and a melt flow rate of 90 g/10 min. Details of the obtained (A-1) polyacetal resin are listed in Table 1.

**[Table 1]**

| Polyacetal species | A-1 | A-2 | A-3 |
|---|---|---|---|
| Trioxane (g/hr) | 3500 | 3500 | 3500 |
| 1,3-dioxolane (g/hr) | 121 | 121 | 121 |
| Methylal (g/hr) | 7.9 | 9.4 | 10.6 |
| Melt flow rate | 90 | 121 | 180 |

### (A-2)

An (A-2) polyacetal resin was produced in a production method similar to that of the (A-1) polyacetal resin, except that the flow rate of methylal as a molecular weight modifier was set to 9.4 g/hr. The resulting (A-2) polyacetal resin had a melting point of 164 °C and a melt flow rate of 121 g/10 min. Details of the obtained (A-2) polyacetal resin are listed in Table 1.

### (A-3)

An (A-3) polyacetal resin was produced in a production method similar to that of the (A-1) polyacetal resin, except that the flow rate of methylal as a molecular weight modifier was set to 10.6 g/hr. The resulting (A-3) polyacetal resin had a melting point of 164 °C and a melt flow rate of 180 g/10 min. Details of the obtained (A-3) polyacetal resin are listed in Table 1.

### (B Polyolefin resin)

Polypropylene (Sumitomo NOBLEN UH501E1 manufactured by Sumitomo Chemical Co.)

### (C Nitrogen-containing compound)

Nylon 66 (Molecular weight: 10000)

### (D Fatty acid metal salt)

Calcium stearate

### (E Fluidity imparting agent)

Paraffin wax (Paraffin wax-14 manufactured by NIPPON SEIRO CO., LTD.

### [Preparation of composition for use in molded bodies]

To 100 parts by mass of any of the polyacetal resins (A-1) to (A-3), 0.05 parts by mass of the (C) nylon 66 and 0.3 parts by mass of the (D) calcium stearate were uniformly added and mixed, which was fed to a twin screw extruder provided with a vent (L/D = 40) set to 200 °C and was pelletized while degassing under reduced pressure at 90 kPa. Then, the resultant was dried at 100 °C for 2 hours to prepare an (A) polyacetal resin composition.

Compositions for use in molded bodies to be used in the production of molded bodies of Comparative Examples 1 to 5 and Examples 1 to 8 were prepared by blending a binder prepared by blending 25 mass% of the (A) polyacetal resin composition, 25 mass% of the (B) polyolefin resin composition, and 50 mass% of the (E) fluidity imparting agent described above, in 100 mass% of the binder components, and SUS316L as the sinterable inorganic powder at the ratios in Table 1.

Except for Example 6, the maximum particle diameter of the metal powder of SUS316L was adjusted to 30 µm using a 30-µm mesh sieve. The maximum particle diameter prior to sieving was 40 µm. Details of the composition for use in molded bodies (molded bodies) are listed in Table 2.

**[Table 2]**

| | | Comp. Ex. 1 | Comp. Ex.2 | Comp. Ex.3 | Comp. Ex.4 | Comp. Ex. 5 | Example 1 | Example 2 | Example 3 | Example 4 | Example 5 | Example 6 | Example 7 | Example 8 |
|---|---|---|---|---|---|---|---|---|---|---|---|---|---|---|
| Details of molded body | Content of SUS powder (mass%) | 70 | 97 | 70 | 85 | 90 | 90 | 90 | 90 | 75 | 95 | 90 | 90 | 90 |
| | Polyacetal species | A-2 | A-2 | A-2 | A-3 | A-1 | A-3 | A-2 | A-1 | A-2 | A-2 | A-2 | A-2 | A-2 |
| | Maximum particle diameter of powder (mm) | 30 | 30 | 30 | 30 | 30 | 30 | 30 | 30 | 30 | 30 | 40 | 30 | 30 |
| | Microscopic observation | X | X | O | X | O | O | O | O | O | O | X | O | O |
| Kneading conditions | Kneading temperature (°C) | 150 | 170 | 170 | 200 | 170 | 170 | 175 | 170 | 170 | 170 | 165 | 175 | 185 |
| Molding conditions | Cylinder temperature (°C) | 160 | 170 | 170 | 200 | 165 | 170 | 170 | 170 | 165 | 170 | 170 | 180 | 170 |
| | Injection pressure (MPa) | 80 | 80 | 80 | 80 | 40 | 80 | 120 | 100 | 80 | 70 | 80 | 80 | 80 |
| Moldability | Moldability (flat plate with 1 mm) | O | X | O | O | O | O | O | O | O | X | O | O | O |
| | Moldability (flat plate with 2 mm) | O | X | O | O | O | O | O | O | O | O | O | O | O |
| Evaluation strength of molded body | Bending modulus (MPa) | 3000 | 16000 | 3500 | 6000 | 10000 | 10000 | 10000 | 10000 | 4000 | 14000 | 7000 | 10000 | 12000 |
| | Bending yield strength (MPa) | 7 | 3 | 45 | 7 | 7 | 10 | 24 | 38 | 40 | 14 | 10 | 32 | 25 |
| | Product of bending modulus and bending yield strength | 24500 | 48000 | 157500 | 42000 | 70000 | 100000 | 240000 | 380000 | 160000 | 196000 | 70000 | 280000 | 300000 |
| Conveyance test | Speed at which damage was seen in ejection test (mm/s) (flat plate with 1 mm) | 10 | - | 10 | 20 | 20 | 40 | O | O | 30 | - | 20 | O | O |
| | Speed at which damage was seen in ejection test (mm/s) (flat plate with 2 mm) | 10 | - | 10 | 20 | 20 | 40 | O | O | 30 | 30 | 20 | O | O |
| | Drop test (number) (flat plate with 1 mm) | 10 | - | 10 | 8 | 7 | 2 | 0 | 1 | 3 | - | 4 | 0 | 0 |
| | Drop test (number) (flat plate with 2 mm) | 10 | - | 9 | 7 | 6 | 1 | 0 | 0 | 2 | 2 | 3 | 0 | 0 |

### [Evaluations]

### (Melt flow rate (MI))

The MI (melt flow rate: g/10 min) was measured under the conditions of 190 °C, 2160 g in accordance with ASTM-D-1238 using MELT INDEXER manufactured by Toyo Seiki Co., Ltd.

### (Preparation of molded body specimen)

After each prepared composition for use in molded bodies was kneaded at 170 °C for 1 hour in a pressing kneader, the resultant kneaded material was cooled and pulverized to obtain a raw material for injection molding. The raw material for injection molding was molded using an injection molding machine (ROBOSHOT α-50iA manufactured by FANUC CORPORATION) under conditions of a molding temperature of 170 °C and an injection pressure of 80 MPa to form a flat plate with a length of 60 mm, a width of 60 mm, and a thickness of 1 mm or 2 mm. In this process, it was checked whether the composition was filled to the end of the mold. The evaluation was made as follows: evaluated as O when the composition was filled to the end, or evaluated as X otherwise. The evaluation results are summarized in Table 2. From the resulting flat plate, a strip-shaped molded body specimen in accordance with JIS K 7139 was cut out.

Even in cases where the above evaluation was determined as "X", a molded body specimen was cut from the flat portion filled in the mold to evaluate the bending yield strength and the bending modulus of the molded body specimen to be described below.

A specimen can be cut out not only from this flat plate but also cut out from any molded body.

### (Bending yield strength of molded body specimen)

The bending yield strength of the a molded body was evaluated by a three-point bend test. Specifically, the bending yield strength and the bending modulus were measured when the above molded body specimen was descended using an autograph (Dual column flore model 5581 manufactured by Instron) at a speed of a load cell of 2 mm/minute with a support jig interval set to 50 mm. The product of the measured bending yield strength (MPa) and the bending modulus (MPa) was calculated. The values of the measured bending yield strength and bending modulus, and the calculated product are listed in Table 2.

### (Microscopic observation)

A strip-shaped specimen was cut from each molded flat plate, and the cross section thereof was observed. The number of voids that were equal to or larger than 30 µm present per 1 mm² was evaluated. Specifically, the entire cross section was observed under a digital microscope (VHX-7000) manufactured by KEYENCE CORPORATION, and the diameter of each void was measured. The 1-mm² area in which the number of voids that were equal to or larger than 30 µm was largest was observed and the number of voids was measured. The specimen was evaluated as follows: evaluated as O when the number of voids was 10 or less, or evaluated as X otherwise. The evaluation results are summarized in Table 2.

### (Conveyance test 1: ejection test)

In the moldability evaluation described above, a composition for use in molded bodies filled to the end of the mold was injection molded again under the same conditions, and the resulting flat plate was tested to evaluate whether or not cracks were caused by ejection by an ejector.

Specifically, tests were conducted with varied ejector ejection speeds of 10 mm/s, 20 mm/s, 30 mm/s, 40 mm/s, and 50 mm/s, and the speed at which the specimen was damaged was recorded. Specimens with no cracking at an ejection speed of 50 mm/s were considered to have a high strength and were evaluated as O. The speeds at which the specimens were damaged are listed in Table 2.

### (Conveyance test 2: drop test)

Composition for use in molded bodies filled to the end of the mold in the moldability evaluation described above were injection molded again under the same conditions, and the resulting flat plates were tested to check whether or not deformation or cracks were generated after they were dropped.

Specifically, 10 flat plates were dropped from a height of 1 m, and the number of deformed or cracked plates was counted. For determination of deformation, a flat plate was considered as deformed when the flat plate was placed on a flat metal plate and warping of the flat plate was observed. For determination of cracks, the external view of a flat plate was examined thoroughly, and one with broken portions or cracks was considered cracked.

The number of deformed or cracked flat plates was counted and recorded. The numbers of deformed or cracked flat plates were listed in Table 2.

### <Results of evaluation of conveyance test 1>

In the ejection test, cracking occurred at a relatively low ejection speed in specimens of the comparative example, whereas the ejection speeds at which cracking occurred were higher in the specimens of the example than the specimens of the comparative example. In particular, in Examples 2, 3, 7, and 8, no cracks occurred even when the ejection speed was 50 mm/s, and the specimens had high strengths. These results indicate that the molded body according to the present disclosure is more durable against damage during conveyance.

### <Results of evaluation of conveyance test 2>

In the drop test, the flat plates of the comparative examples, especially those of Comparative Examples 1 and 3, were deformed or cracked in most cases. In contrast, no deformation or cracking occurred in most of the flat plates of the example, especially those in Examples 1 to 5, 7, and 8. These results indicate that the molded body according to the present disclosure is more durable against damage during conveyance.

The organic binder, the metal powder, the kneading conditions, and the molding conditions were suitably adjusted so as to achieve appropriate balance in the molded bodies of Examples 1 to 8, which satisfied the bending modulus (MPa) upon 0.05% to 0.1% strain of the molded bodies of 4000 to 15000 and the bending yield strength (MPa) of 10 or more. All of these indicated excellent results in the conveyance test. In contrast, the molded bodies of Comparative Examples 1 to 5, in which the balance of the blending amount of the metal powder, the kneading conditions, and the molding conditions were changed, had lower bending modulus and bending yield strength, and the results of the thin moldability and the conveyance test were inferior to those of the examples.

## Claims

1. A molded body comprising a sinterable inorganic powder and an organic binder,
wherein a bending modulus (MPa) upon 0.05% to 0.1% strain of the molded body is 4000 to 15000, and
a bending yield strength (MPa) is 10 or more.

2. The molded body according to claim 1, wherein a product of the bending modulus (MPa) and the bending yield strength (MPa) is 50000 or more.

3. The molded body according to claim 1 or 2, wherein a number of voids that are equal to or larger than 30 µm per 1 mm² is 10 or less when a cross section is observed under a microscope.

4. The molded body according to any one of claims 1 to 3, wherein a maximum particle diameter of the sinterable inorganic powder is 30 µm or less.

5. The molded body according to any one of claims 1 to 4, a polyacetal resin is contained as the organic binder.

6. The molded body according to claim 5, wherein a melt flow rate of the polyacetal resin is 70 to 200 g/10 min.

7. The molded body according to any one of claims 1 to 6, wherein 75 mass% or more and 95 mass% or less of the sinterable inorganic powder is contained with respect to 100 mass% of the molded body.

8. The molded body according to any one of claims 1 to 7, wherein the sinterable inorganic powder is a metal powder.

9. The molded body according to any of claims 1 to 8, wherein a portion with a thickness of 1 mm or less is present at 100 mm² or more.

10. A method of producing a molded body comprising a sinterable inorganic powder and an organic binder, the method comprising:
a kneading step of kneading the sinterable inorganic powder and the organic binder to obtain a kneaded product; and
a molding step of molding the kneaded product to obtain a molded body,
wherein a bending modulus (MPa) upon 0.05% to 0.1% strain of the molded body is 4000 to 15000, and
a bending yield strength (MPa) is 10 or more.

11. The method of producing a molded body according to claim 10, wherein a kneading temperature in the kneading step is 160 °C to 200 °C.

12. The method of producing a molded body according to claim 10 or 11, wherein a cylinder temperature in the molding step is 150 °C to 190 °C.

13. The method of producing a molded body according to any one of claims 10 to 12, wherein an injection pressure in the molding step is 50 MPa or more.

14. The method of producing a molded body according to any one of claims 10 to 13, wherein 75 mass% or more and 95 mass% or less of the sinterable inorganic powder is contained with respect to 100 mass% of the molded body.

15. A method of producing a sintered body, the method comprising:
a degreasing step of removing the organic binder from the molded body according to any one of claims 1 to 9 or a molded body produced by the method of producing a molded body according to any one of claims 10 to 14 by heating or a chemical treatment to obtain a sintering precursor; and
a sintering step of sintering the sintering precursor to obtain a sintered body.
